# EUROPÄISCHE PATENTANMELDUNG

(11) **EP 1 480 306 A2**
(43) Veröffentlichungstag der Anmeldung: **24.11.2004**
(21) Anmeldenummer: 04006297.8
(22) Anmeldetag: 17.03.2004
(51) Int. Cl.: H02B 1/048

(54) **Befestigungshülse zur Befestigung eines Sensorgehäuses**

(30) Priorität: 21.05.2003 DE 10324296
(71) Anmelder: Valeo Schalter und Sensoren GmbH, 74321 Bietigheim-Bissingen (DE)
(72) Erfinder: Güllich, Armin, 71522 Backnang (NE); Neft, Hubert, 71723 Grossbottwar (DE)
(74) Vertreter: Dreiss, Fuhlendorf, Steimle & Becker

(57) **Zusammenfassung**

Die Erfindung betrifft eine Befestigungshülse zur Befestigung eines Sensorgehäuses an einem Karosserieteil eines Fahrzeugs, wobei die Hülse einen Anschlag zur Anlage an die eine Seite des Karosserieteils und mehrere sich in Längsrichtung erstreckende, in radialer Richtung wenigstens bedingt elastisch nachgiebige Federarme zur Hinterrastung an der anderen Seite des Karosserieteils umfasst. Die Erfindung kennzeichnet sich dadurch, dass jeder Federarm lediglich eine Ratsnase zur Verriegelung der Hülse am Karosserieteil und lediglich einen Federbügel zum Toleranzausgleich der Karosserieteilstärke aufweist.

## Beschreibung

Die Erfindung betrifft eine Befestigungshülse zur Befestigung eines Sensorgehäuses an einem Karosserieteil eines Fahrzeugs. Bei dem Sensorgehäuse handelt es sich in der Regel um ein Gehäuse für einen Ultraschallsensor, der zur Umfelderfassung des Fahrzeugs eingesetzt wird. Bei dem Karosserieteil handelt es sich vorzugsweise um einen Stoßfänger, der eine bestimmte Materialstärke aufweist. Zur Befestigung der Befestigungshülse an dem Karosserieteil weist die Hülse einen Anschlag zur Anlage an die eine Seite des Karosserieteils und mehrere, sich in Längsrichtung erstreckende, in radialer Richtung wenigstens bedingt elastisch nachgiebige Federarme zur Hinterrastung an der anderen Seite des Karosserieteils auf. Derartige Befestigungshülsen sind beispielsweise aus der DE 196 26 291 A1 bekannt geworden. Die symmetrisch ausgebildeten Federarme weisen hierbei jeweils zwei Rastnasen zur Verriegelung am Karosserieteil und jeweils einen zwischen den beiden Rastnasen vorgesehenen Federbügel auf. Der Federbügel dient zum Toleranzausgleich der Karosserieteilstärke.

Die aus der DE 196 26 291 A1 bekannt gewordenen Befestigungshülsen sind in ihrer Herstellung recht aufwändig. Insbesondere zur Ausbildung des Federbügels zwischen den beiden Rastnasen sind sehr genaue Formteile erforderlich. Bei der bekannten Befestigungshülse hat sich außerdem gezeigt, dass sie in am Karosserieteil befestigten Zustand zum Verkippen neigt.

Neuere Sensoren, die von der Befestigungshülse befestigt werden sollen, bauen kompakter und weisen geringere Durchmesser auf, weshalb der Umfang der Befestigungshülse geringer wird. Eine Verwendung der bekannten Hülsen mit in radialer Draufsicht relativ breit ausgebildeten Federarmen mit den beiden Rastnasen und dem dazwischen angeordneten Federbügel ist hierbei aus Platzgründen problematisch.

Der vorliegenden Erfindung liegt deshalb die Aufgabe zugrunde, eine aus der DE 196 26 291 A1 bekannte Befestigungshülse derart weiterzubilden, dass Herstellungskosten eingespart werden können, dass ein dauerhaftes, positionssicheres Anordnen ermöglicht wird und dass sie auch bei Sensorgehäusen mit einem geringen Durchmesser Verwendung finden können. Insbesondere soll den beschriebenen Nachteilen abgeholfen werden.

Diese Aufgabe wird durch eine Befestigungshülse der eingangs beschriebenen Art erfindungsgemäß dadurch gelöst, dass jeder Federarm lediglich eine Rastnase zur Verriegelung der Hülse am Karosserieteil und lediglich einen Federbügel zum Toleranzausgleich der Karosserieteilstärke aufweist. Hierdurch kann im Vergleich zum gattungsgemäßen Stand der Technik der Federarm in radialer Draufsicht schlanker bauen, was eine Platzersparnis zur Folge hat. Außerdem lässt sich der Federarm einer erfindungsgemäßen Befestigungshülse einfacher formen, da lediglich eine Rastnase und lediglich ein Federbügel vorgesehen sind. Zudem wird erreicht, dass insgesamt weniger Rastnasen und damit weniger Auflagen zur Anlage an das Karosserieteil vorliegen. Einem Verkippen der Befestigungshülse am Karosserieteil wird damit entgegengewirkt.

Eine bevorzugte Ausführungsform der Erfindung zeichnet sich dadurch aus, dass jede Rastnase eine punktförmige Auflage zur Anlage an das Karosserieteil aufweist. Vorteilhafterweise sind insgesamt drei Federarme, das heißt drei Rastnasen vorgesehen. Damit ergeben sich drei Auflagepunkte der Befestigungshülse an der einen Seite des Karosserieteils. Durch eine derartige 3-Punkt-Auflage wird ein Verkippen der Befestigungshülse unterbunden. Vorteilhafterweise sind die Auflagen der Rastnasen derart angeordnet, dass sie einen wenigstens weitgehend äquidistanten Abstand zueinander aufweisen. Vorteilhafterweise ist der Abstand jeweils 120° bezogen auf die Mittellängsachse der Befestigungshülse.

Eine weitere, besonders bevorzugte Ausführungsform der Erfindung kennzeichnet sich dadurch, dass der Federarm von zwei sich in axialer Richtung erstreckenden Spalten begrenzt wird, wobei ein parallel zu den beiden Spalten verlaufender Trennspalt zwischen der Rastnase und dem Federbügel vorgesehen ist. Eine derartige Ausbildung ist mit geringem Aufwand zu realisieren und gewährleistet dennoch eine sichere Anbringung der Befestigungshülse am Karosserieteil.

Dabei kann insbesondere vorgesehen sein, dass die beiden Spalte und der Trennspalt wenigstens weitgehend gleich breit sind. Die Spalte und der Trennspalt sind vorteilhafterweise so breit, dass sie ohne zusätzlichen Aufwand herstellbar, insbesondere formbar, sind.

Je nach gewünschter Einstellung der Elastizität der Rastnase beziehungsweise des Federbügels können die beiden Spalte in axialer Richtung länger ausgebildet sein als der Trennspalt. Insbesondere über die Länge des Trennspalts kann die Elastizität des Federbügels beeinflusst werden.

Vorteilhaft ist ferner, wenn die Rastnase in radialer Sicht breiter ausgebildet ist als der Federbügel. Da die Rastnase zur Aufnahme von hohen Kräften dient, kann mit einer entsprechend breiten Ausbildung eine entsprechend sichere Befestigung gewährleistet werden.

Weitere Einzelheiten und vorteilhafte Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figuren 1, 2 und 3: verschiedene Seitenansichten einer erfindungsgemäßen Befestigungshülse;

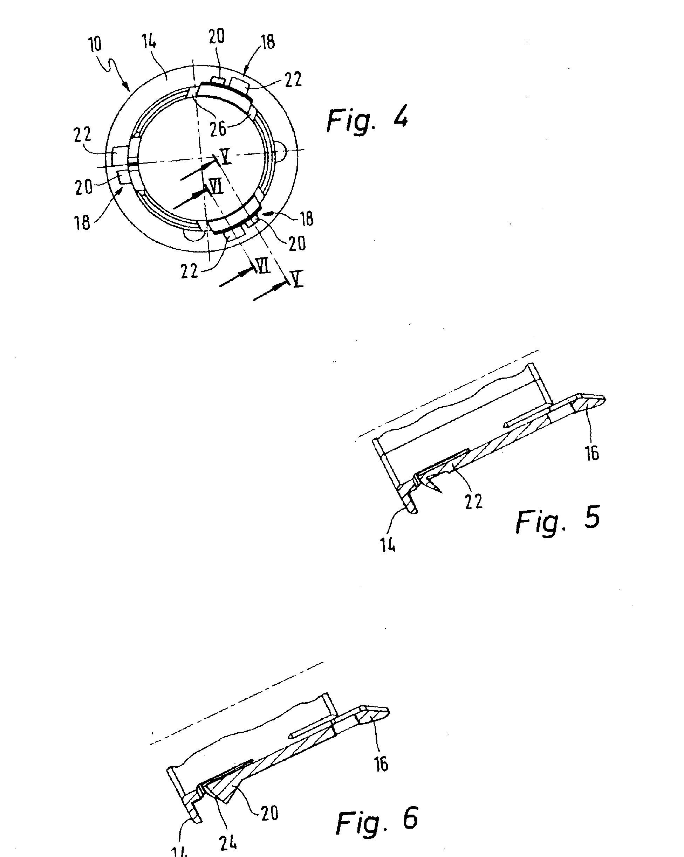

- Figur 4: die Unteransicht der Hülse gemäß Figur 1 bis 3; und
- Figuren 5 und 6: zwei verschiedene Schnitte entlang den Linien V und VI der Figur 4.

Die in den Figuren dargestellte Befestigungshülse 10 weist einen hohlzylinderartigen Grundkörper 12 auf, der an seiner einen Stirnseite einen ringbundartigen Anschlag 14 umfasst. Auf der dem Anschlag 14 abgewandten Seite sieht die Hülse 10 Rastabschnitte 16 vor, die mit nicht dargestellten Rastabschnitten eines nicht dargestellten Sensorgehäuses zusammenwirken können. Zur Befestigung des Sensors in der Hülse 10 wird dieser in die Hülse so weit eingeschoben, bis die entsprechenden Rastabschnitte miteinander verrasten.

Die Hülse 10 sieht zur Befestigung am nicht dargestellten Karosserieteil insgesamt drei Federarme 18 vor. Die Federarme 18 umfassen jeweils eine Rastnase 20 und einen Federbügel 22. Die Rastnasen 20 dienen zur Verriegelung der Hülse am Karosserieteil; die Federbügel 22 zum Toleranzausgleich der Karosserieteilstärke. Zur Befestigung der Hülse 10 an dem Karosserieteil wird die Hülse 10 mit ihren Rastabschnitten 16 voran durch eine Öffnung im Stoßfänger so weit eingeführt, bis der Anschlag 14 an der einen Seite des Karosserieteils anliegt. Beim Einführen verformen sich die Federarme elastisch in nach radial innen gewandter Richtung. Beim Erreichen der Endmontageposition schnappen die Rastnasen 20 in ihre dargestellte Lage und verriegeln die Hülse 10 am Karosserieteil.

Um die Toleranz der Karosserieteilstärke auszugleichen, ragen die in Seitenansicht L-förmig ausgebildeten Federbügel 22 weiter in Richtung des Anschlags 14 als die Rastnasen 20. Außerdem sind die Federbügel 22 aufgrund ihrer L-förmigen Ausbildung in axialer Richtung wenigstens bedingt elastisch nachgiebig.

Vorteilhafterweise hat jede Rastnase 20 eine punktförmige Auflage 24 zur Anlage an das Karosserieteil. Da insgesamt drei äquidistant, unter einem Winkel von 120° zueinander angeordnete Federarme 18 vorgesehen sind, weist die Hülse 10 drei Auflagepunkte auf. Ein Verkippen der Hülse 10 am Karosserieteil ist folglich nicht möglich. Sämtliche Federarme 18 sind identisch ausgebildet.

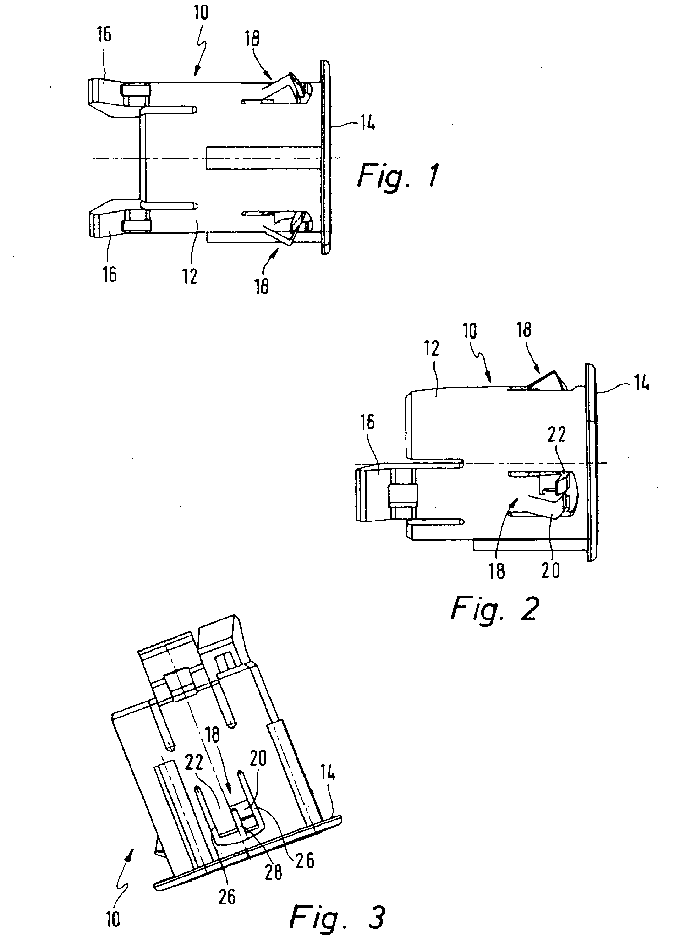

Wie insbesondere aus der Figur 3 deutlich wird, werden die Federarme 18 von zwei sich in axialer Richtung erstreckenden Spalten begrenzt. Zwischen der jeweiligen Rastnase 20 und dem jeweiligen Federbügel 22 ist ein Trennspalt 28 vorgesehen. Die beiden Spalte 26 und der Trennspalt 28 sind gleich breit ausgebildet. Außerdem sind die beiden Spalte 26 in axialer Richtung länger als der Trennspalt. Je nach Länge der Spalte 26 beziehungsweise des Trennspalts 28 kann die Elastizität der Federarme 18 beziehungsweise der Rastnase 20 und des Federbügels 22 eingestellt werden. Aus Figur 3 wird ebenfalls deutlich, dass die Rastnase 20 in radialer Sicht schmaler ausgebildet ist als der Federbügel 22.

Die erfindungsgemäßen Federarme 18 sind in radialer Ansicht vergleichsweise schlank und können gerade bei vergleichsweise geringen Durchmessern von zu befestigenden Sensorgehäusen eine sichere und positionsgenaue Halterung der Hülse 10 am Karosserieteil gewährleisten.

Sämtliche in der Beschreibung, den nachfolgenden Ansprüchen und in der Figur beschriebenen und dargestellten Merkmale können sowohl einzeln, als auch in beliebiger Kombination miteinander erfindungswesentlich sein.

## Patentansprüche

1. Befestigungshülse (10) zur Befestigung eines Sensorgehäuses an einem Karosserieteil eines Fahrzeugs, wobei die Hülse (10) einen Anschlag (14) zur Anlage an die eine Seite des Karosserieteils und mehrere sich in Längsrichtung erstreckende, in radialer Richtung wenigstens bedingt elastisch nachgiebige Federarme (18) zur Hinterrastung an der anderen Seite des Karosserieteils umfasst, **dadurch gekennzeichnet, dass** jeder Federarm (18) lediglich eine Ratsnase (20) zur Verriegelung der Hülse (10) am Karosserieteil und lediglich einen Federbügel (22) zum Toleranzausgleich der Karosserieteilstärke aufweist.

2. Befestigungshülse (10) nach Anspruch 1, **dadurch gekennzeichnet, dass** jede Rastnase (20) eine punktförmige Auflage (24) zur Anlage an das Karosserieteil aufweist

3. Befestigungshülse (10) nach Anspruch 1 oder 2, **dadurch gekennzeichnet, dass** die Auflagen (24) der Rastnasen (20) einen wenigstens weitgehenden äquidistanten Abstand zueinander aufweisen.

4. Befestigungshülse (10) nach Anspruch 1, 2 oder 3, **dadurch gekennzeichnet, dass** die Federarme (18) jeweils von zwei sich in axialer Richtung erstreckenden Spalten (26) begrenzt werden, wobei ein parallel zu den beiden Spalten (26) verlaufender Trennspalt (28) zwischen der jeweiligen Rastnase (20) und dem jeweiligen Federbügel (22) vorgesehen ist.

5. Befestigungshülse (10) nach Anspruch 4, **dadurch gekennzeichnet, dass** die beiden Spalte (26) und der Trennspalt (28) wenigstens weitgehend gleich breit sind.

6. Befestigungshülse (10) nach Anspruch 5 oder 6, **dadurch gekennzeichnet, dass** die beiden Spalte (26) in axialer Richtung länger ausgebildet sind als der Trennspalt (28).

7. Befestigungshülse (10) nach einem der vorhergehenden Ansprüche, **dadurch gekennzeichnet, dass** die jeweilige Rastnase (20) in radialer Sicht schmaler ausgebildet ist als der jeweilige Federbügel (22)
